# EUROPEAN PATENT APPLICATION

(11) **EP 3 222 512 A1**
(43) Date of publication of application: **27.09.2017**
(21) Application number: 17162094.1
(22) Date of filing: 21.03.2017
(51) Int. Cl.: B63J 2/10

(54) **AUTOMATIC CLOSING DEVICE OF SHIP AIR PIPE**

(30) Priority: 22.03.2016 JP 2016057662
(71) Applicant: Niikura Kogyo Co., Ltd, Gotenba-shi, Shizuoka 412-0047 (JP)
(72) Inventor: NIIKURA, Futoshi, Shizuoka, 412-0047 (JP)
(74) Representative: dompatent von Kreisler Selting Werner - Partnerschaft von Patent- und Rechtsanwälten mbB

(57) **Abstract**

An air pipe is reliably closed to prevent outflow of the content of a tank as much as possible in case of sinking of a ship. This device has: a valve body (2) constituting part of a flow channel of an air pipe and forming a valve seat intersecting with the flow channel; an actuation shaft (3) turnably attached to the valve body; a valve disc (4) integrally attached to the actuation shaft and configured to open/close the flow channel by seating/unseating onto/from the valve seat; a closing spring (5) erected between the actuation shaft and the valve body and configured to bias the valve disc toward a seated position; a locking mechanism (R) configured to lock the actuation shaft in a state that the valve disc is unseated against biasing force of the closing spring; and a hydraulic-pressure detecting mechanism (P) configured to cancel the locking of the actuation shaft of the locking mechanism when the hydraulic pressure exceeds a set value.

## Description

### BACKGROUND OF THE INVENTION

### Field of the Invention

The present invention relates to an automatic closing device of a ship air pipe attached to the air pipe provided together with a ballast tank, a fuel tank, a lubricant oil tank, or the like of a ship so as to prevent seawater from ingressing into the tank.

### Description of the Related Art

Generally, a ship is provided with a tank such as a ballast tank, a fuel tank, or a lubricant oil tank, and air pipes for internal pressure adjustment is provided together with these tanks.

The top part of the air pipe is projecting to outside the ship from an upper deck or the like of the ship in order to communicate with outside air.

Incidentally, regarding such an air pipe, if seawater pours onto the deck, it is expected that the seawater enters therein from the top part of the air pipe and ingresses into the tank through the air pipe.

In order to take a measure for such a trouble, for example, as shown in Patent Document 1, there is proposed a technique in which a float valve is attached to the top part of the air pipe, and, if seawater ingresses to the top part of the air pipe, the float valve is closed by utilizing buoyancy generated by the seawater, thereby preventing ingress of the seawater.

[Patent Document 1] Japanese patent Application Laid-Open No. 2002-178982

The above described float valve is configured to close the air pipe by using the buoyancy of the seawater.

In other words, it is in the state that a hydraulic pressure is always acting on the float valve which is in a closed state.

In a case in which the ship is in a normal state, such a hydraulic pressure is released in a short period of time when the seawater drops onto the sea surface from the deck.

However, if the ship sinks, the float valve is in the sea, and the hydraulic pressure continues to act on the float valve.

Moreover, if the sinking advances and increases the depth thereof, the hydraulic pressure is increased along with that.

On the other hand, a float of the float valve is configured to hollow the interior thereof to increase the obtained buoyance or use a lightweight material to reduce the weight thereof as much as possible in order to increase the responsiveness in a case of valve closing.

On the other hand, mechanical strength of the float is not sufficiently obtained.

Therefore, in the case of the above described float valve, it is expected that the float is broken since the float cannot withstand the hydraulic pressure which acts thereon in case of sinking of the ship.

If the float is broken, the closing of the air pipe by the float valve is cancelled, seawater flows into the tank via the air pipe, and the fuel or the like in the tank leaks to outside of the ship.

The present invention has been accomplished in view of such conventional problems, and an object to be solved is to provide an automatic closing device of a ship air pipe capable of preventing outflow of the content of a tank as much as possible by reliably closing the air pipe in case of sinking of the ship.

### SUMMARY OF THE INVENTION

In order to solve the above described problems, an automatic closing device of a ship air pipe of the present invention is an automatic closing device of the ship air pipe provided in a vicinity of a pipe head of the air pipe installed in a ship, the automatic closing device configured to detect a hydraulic pressure generated in case of sinking of the ship so as to close the air pipe, the automatic closing device characterized by having: a valve body constituting part of a flow channel of the air pipe and forming a valve seat intersecting with the flow channel; an actuation shaft turnably attached to the valve body; a valve disc integrally attached to the actuation shaft and configured to open/close the flow channel by seating/unseating onto/from the valve seat; a closing spring erected between the actuation shaft and the valve body and configured to bias the valve disc toward a seated position; a locking mechanism configured to lock the actuation shaft in a state that the valve disc is unseated against biasing force of the closing spring; and a hydraulic-pressure detecting mechanism configured to cancel the locking of the actuation shaft of the locking mechanism when the hydraulic pressure exceeds a set value.

In normal time, the automatic closing device of the ship air pipe of the present invention configured in this manner turns the actuation shaft against the biasing force of the closing spring and separates the valve disc, which is attached to the actuation shaft, from the valve seat.

Furthermore, by restraining the turning of the actuation shaft by the locking mechanism, the valve disc is retained in an unseated state in which it is separated from the valve seat.

In this state, the ship air pipe is retained in a communicated state across the entire length thereof. As a result of this, the tank in the ship is communicated with outside air, and the pressure in the tank is adjusted.

On the other hand, if the ship sinks, the automatic closing device also sinks into the sea together with the ship; and, if the depth thereof becomes a predetermined depth and the hydraulic pressure caused by the seawater exceeds the set value, the hydraulic-pressure detecting mechanism is actuated and cancels the locked state of the actuation shaft of the locking mechanism.

When the locked state is canceled in this manner, the actuation shaft is turned by the biasing force of the closing spring, and, together with this, the valve disc attached to the actuation shaft is seated on the valve seat.

Then, since the actuation shaft has continued receiving the biasing force of the closing spring, the valve disc is retained at the seated position.

By such seating of the valve disc, the air pipe is closed, the tank is sealed, and outflow of the content of the tank is prevented.

Herein, as the depth of sinking becomes deeper, the valve disc which has continued receiving the biasing force of the closing spring receives the force of separation from the valve seat (hereinafter, referred to as valve opening force) which is generated by the difference between the tank pressure in the ship and the hydraulic pressure of the seawater.

When the valve opening force exceeds the biasing force of the closing spring as the depth of sinking becomes further deeper, the seawater is caused to flow into the tank side of the ship, thereby retaining the difference between the pressure in the tank in the ship and the hydraulic pressure of the seawater within a set range and protecting the tank in the ship from being broken or damaged.

Therefore, regardless of the depth of sinking, the tank in the ship can be prevented from being broken or damaged, and outflow of the content of the tank can be prevented.

The actuation shaft is projecting to the lateral part of the valve body, and the locking mechanism can be provided at the projecting part.

More specifically, the actuation shaft is projected to the lateral part of the valve body, and the recessed part is formed on the lateral surface of the projecting part.

The locking mechanism includes: an retainer provided to surround the actuation shaft, configured to be movable in a direction of an axis of the actuation shaft and be restrained from turning about the axis, having a locking groove formed on an inner surface thereof, the locking groove being along the axis of the actuation shaft; an engagement member freely fitted in the locking groove and capable of engaging with the recessed part; and a set spring configured to press the retainer toward a position overlapped with the recessed part together with the engagement member; and, in the locking groove, a shallow groove part configured to push the engagement member into the recessed part when the retainer is moved to the position overlapped with the recessed part and a deep groove part configured to enable the engagement member to be detached from the recessed part when moved to a position separated from the recessed part are formed.

According to the locking mechanism like this, when the actuation shaft is turned to the position at which the valve disc is unseated, the state of normal time can be obtained.

More specifically, when the actuation shaft is turned in the above described manner, the actuation shaft is relatively turned with respect to the retainer, and the recessed part formed on the lateral part of the actuation shaft is opposed to the locking groove of the retainer.

In this state, the engagement member positioned in the locking groove is also opposed to the recessed part.

Herein, since the retainer is biased in the direction to be overlapped with the above part by the set spring, the retainer is moved so as to be overlapped with the recessed part, and the shallow groove part of the locking groove formed on the retainer is also moved to the position overlapped with the recessed part.

By the movement of the shallow groove part like this, the engagement member is pushed into the recessed part.

As a result, the retainer and the actuation shaft are caused to be in an engaged state via the engagement member, the valve disc is retained at the unseated position, and communication between the tank and the outside air by the air pipe is ensured.

Then, when a predetermined hydraulic pressure is detected by the hydraulic-pressure detecting mechanism, the retainer is moved to the position at which the deep groove part of the locking groove is overlapped with the recessed part against the biasing force of the set spring.

In this state, the restraining force to the engagement member, which has been pushed into the recessed part, (in other words, the locking force between the engagement member and the actuation shaft) is released, and the biasing force in the direction about the axis is applied to the actuation shaft by the closing spring. Therefore, the actuation shaft is turned so as to seat the valve disc.

In the case of turning of the actuation shaft like this, the engagement member that is opposed to the deep groove part is free to move in the direction to get away from the actuation shaft. Therefore, the engagement member, which has been pushed into the recessed part, is easily pushed out from the recessed part.

Therefore, turning of the actuation shaft is smoothly carried out, and the valve disc attached to the actuation shaft is turned to the seated position.

Then, the seated valve disc is retained at the seated position by the biasing force of the closing spring, which acts thereon via the actuation shaft.

The hydraulic-pressure detecting mechanism has a bottomed-tube-shaped casing attached to an outer part of the valve body to enclose the projecting part of the actuation shaft and the retainer and a diaphragm coupling the casing and the retainer and having flexibility to form an airtight chamber in a bottom side of the casing; and the casing is attached so as to form a gap from the valve body at an opening thereof and form an ingress path of water, and the set spring is configured to be interposed between a bottom part of the casing forming the airtight chamber and the retainer.

By using such a configuration, when the ship sinks into water, seawater enters the casing from the gap between the casing and the valve body, contacts the diaphragm attached in the casing, and causes a hydraulic pressure to act on the diaphragm.

If the hydraulic pressure exceeds the pressure set by the set spring, the diaphragm is deformed so as to reduce the volume of the airtight chamber, and this deformation moves the retainer along the actuation shaft in the direction in which the retainer is separated from the valve body.

When the retainer is moved in such a manner, as described above, the valve seat is seated since the locking force with respect to the actuation shaft is released, and the air pipe is closed.

On the other hand, if seawater ingresses into the casing in normal time, only the kinetic energy of the seawater acts on the diaphragm, and the kinetic energy fragmentally acts thereon. Therefore, the external force thereof is equal to or less than the pressure set by the set spring.

Furthermore, if waves are poured onto the casing in normal time, since there is no shielding object in the outer periphery of the casing, the waves pass through the gap between the casing and the valve body and, in this process, generate a negative pressure in the casing.

This negative pressure acts on the diaphragm as the force in the direction in which the retainer is pushed against the coupling plate, unnecessary movement of the retainer is prevented, and malfunctioning of the hydraulic-pressure detecting mechanism is prevented.

Therefore, the automatic closing device of the present invention does not act in normal time.

According to the automatic closing device of the ship air pipe of the present invention, in case of sinking of the ship, the ship air pipe can be reliably closed to prevent outflow of the content in the tank of the ship, and the strength that sufficiently withstands the hydraulic pressure of seawater can be easily ensured.

### BRIEF DESCRIPTION OF THE DRAWINGS

FIG. 1 is a schematic view of a ship to which an embodiment of the present invention is applied;
FIG. 2 is a front view of the embodiment of the present invention;
FIG. 3 is a plan view of the embodiment of the present invention;
FIG. 4 shows the embodiment of the present invention and is a cross-sectional view of a line IV-IV of FIG. 3;
FIG. 5 shows the embodiment of the present invention and is a vertical cross-sectional view for describing actuation;
FIG. 6 shows the embodiment of the present invention and is a vertical cross-sectional view for describing actuation;
FIG. 7 shows the embodiment of the present invention and is an enlarged vertical cross-sectional view showing a hydraulic-pressure detecting mechanism; and
FIG. 8 shows the embodiment of the present invention and is an enlarged vertical cross-sectional view for describing actuation of the hydraulic-pressure detecting mechanism.

### DETAILED DESCRIPTION OF THE PREFERRED EMBODIMENT

Hereinafter, an embodiment of the present invention will be described with reference to drawings.

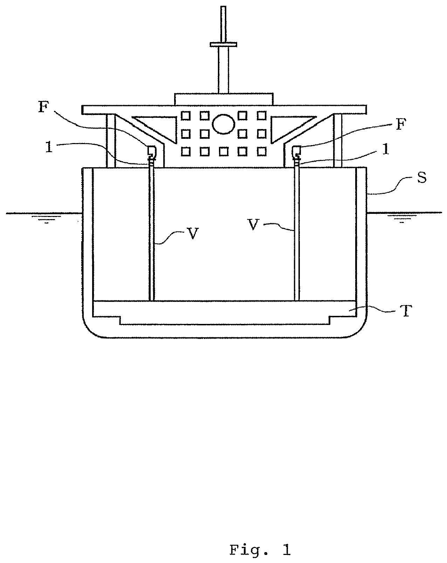

In these drawings, a reference sign "1" represents an automatic closing device according to the present embodiment, and this automatic closing device 1 is provided in a ship S for example as shown in FIG. 1 and is attached to upper end part of an air pipe V, which is for communicating the interior of a tank T in the ship with outside air, and to a position projecting from a deck of uppermost part of the ship S.

Moreover, in the present embodiment, a float valve F for preventing ingress of seawater at normal time is attached to an upper end of the air pipe V, and the automatic closing device 1 of the present embodiment is attached below that.

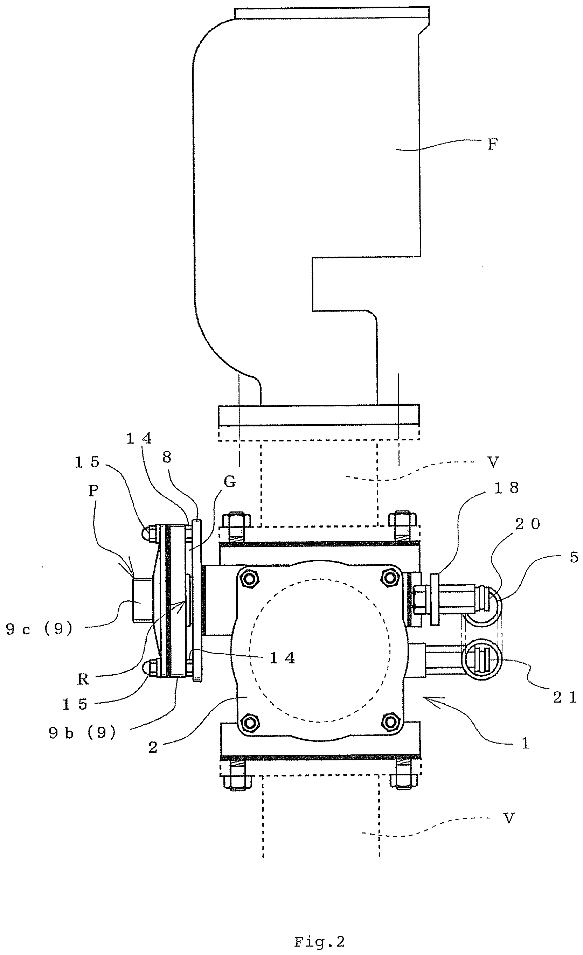

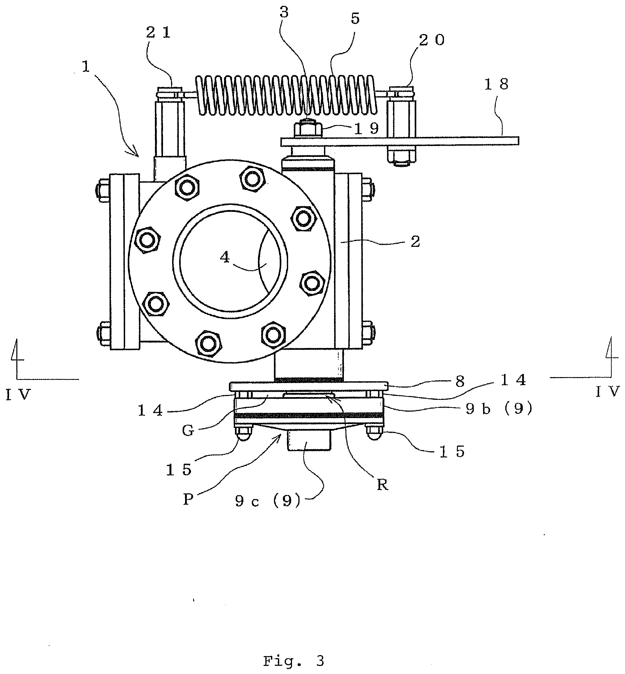

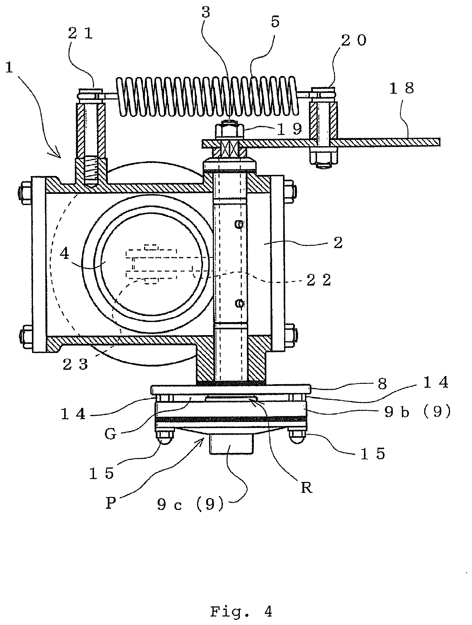

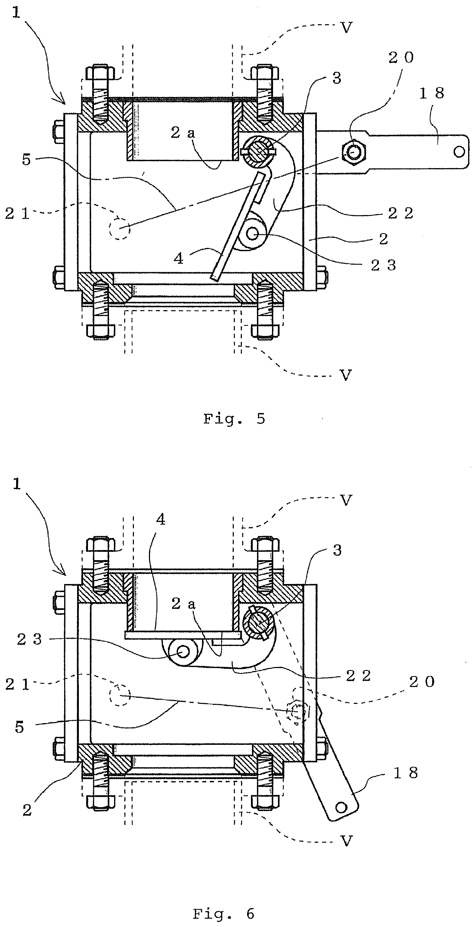

The automatic closing device 1 has: a valve body 2 constituting part of a flow channel of the air pipe V and forming a valve seat 2a intersecting with the flow channel (see FIG. 5 and FIG. 6); an actuation shaft 3 turnably attached to the valve body 2 (see FIG. 4 or FIG. 6); a valve disc 4 integrally attached to the actuation shaft 3 and configured to open/close the flow channel by seating/unseating onto/from the valve seat 2a (see FIG. 3 or FIG. 6); a closing spring 5 erected between the actuation shaft 3 and the valve body 2 and configured to bias the valve disc 4 toward a seated position (see FIG. 2 or FIG. 6) ; a locking mechanism R configured to lock the actuation shaft 3 in a state that the valve disc 4 is unseated against biasing force of the closing spring 5 (see FIG. 2 or FIG. 4 and FIG. 7); and a hydraulic-pressure detecting mechanism P configured to cancel the locking of the actuation shaft 3 of the locking mechanism R when the hydraulic pressure exceeds a set value (see FIG. 2 or FIG. 4 and FIG. 7).

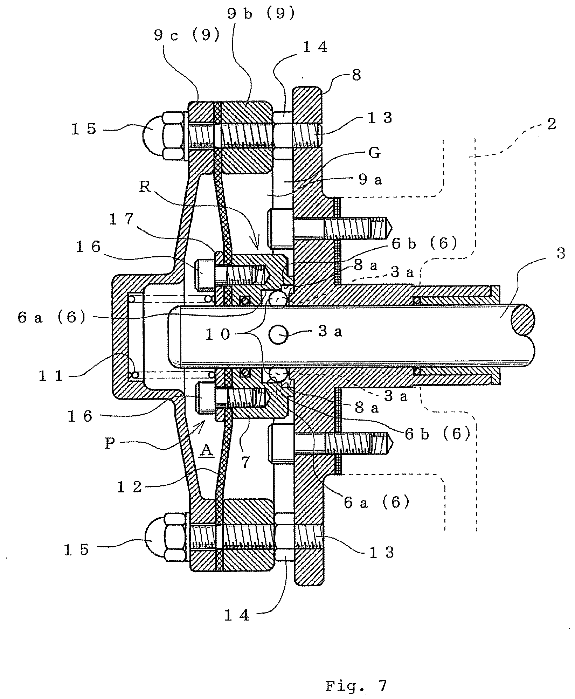

In more detail, both end parts of the actuation shaft 3 are projecting to lateral parts of the valve body 2, and, on a lateral surface of one of the projecting parts, a plurality of recessed parts 3a are formed at an interval in a circumferential direction (in the present embodiment, at four locations with interval of 90°) as shown in FIG. 7.

As shown in FIG. 7, the locking mechanism R has the actuation shaft 3 turnably fitted therein in one of the projecting-part sides of the actuation shaft 3 and attached to a coupling plate 8, which is attached to the valve body 2.

A later-described casing 9, which constitutes the hydraulic-pressure detecting mechanism P, is attached to the coupling plate 8, the casing 9 is formed in a bottomed tubular shape and is attached so as to cause the opening thereof to face the coupling plate 8 and form a gap G with the coupling plate 8, and the locking mechanism R is attached in the casing 9 via the hydraulic-pressure detecting mechanism P.

The locking mechanism R is composed of: an annular retainer 7 provided to surround the actuation shaft 3, configured to be movable in a direction of an axis of the actuation shaft 3 and be restrained from turning about the axis, having a locking groove (s) 6 formed on an inner surface thereof, the locking groove 6 being along the axis of the actuation shaft 3 and opened toward the coupling plate 8; a spherical engagement member(s) 10 freely fitted in the locking groove(s) 6 and capable of engaging with the recessed part(s) 3a; and a set spring 11 configured to press the retainer 7 toward a position overlapped with the recessed part(s) 3a together with the engagement member(s) 10.

The set spring 11 is interposed in a compressed state between the casing 9 and the retainer 7.

On the other hand, the plurality of locking grooves 6 are formed (in the present embodiment, at four locations) at the same intervals as the recessed parts 3a, which are formed on the actuation shaft 3.

On each of the locking grooves 6, a shallow groove part 6a, which pushes the engagement member 10 into the recessed part 3a when the retainer 7 s moved to the position overlapped with the recessed part 3a, and a deep groove part 6b, which enables the engagement member 10 to be separated from the recessed part 3a when moved to the position separated from the recessed part 3a, are formed.

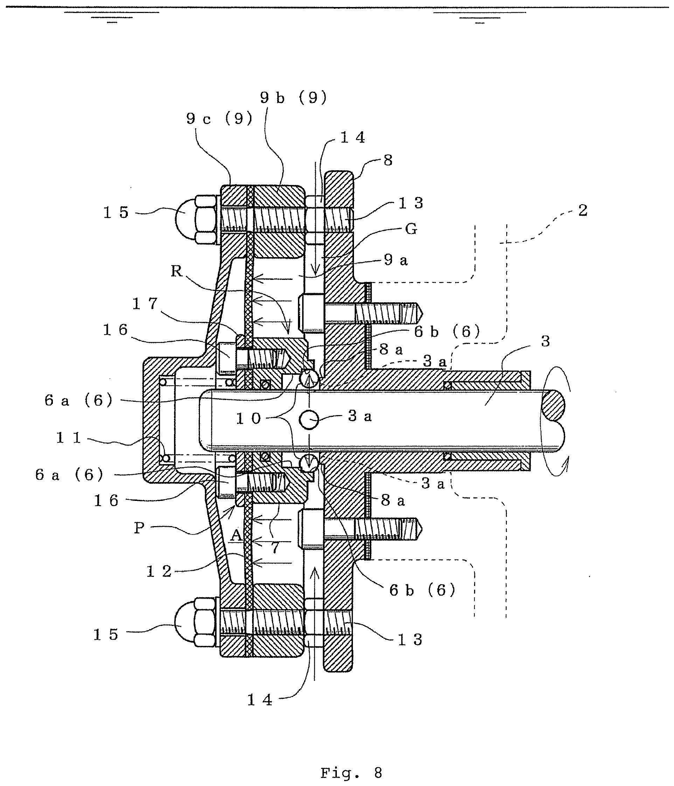

Furthermore, as shown in FIG. 7 and FIG. 8, on the part of the coupling plate 8 that is opposed to the retainer 7, guide projections 8a, which are to be mated with the locking grooves 6 from the openings thereof, are provided to project therefrom.

These guide projections 8a are always in a state in which they are mated with the locking grooves 6, thereby restraining turning of the retainer 7 about the axis with respect to the actuation shaft 3.

The hydraulic-pressure detecting mechanism P is provided with: the bottomed-tube-shaped casing 9, which is attached to an outer part of the valve body 2 to enclose the projecting parts of the actuation shaft 3 and the retainer 7, and a diaphragm 12, which couples the casing 9 and the retainer 7 and has flexibility to form an airtight chamber A in the bottom side of the casing 9.

The casing 9 is attached so as to form the gap G from the valve body 2 at the opening 9a thereof to form an ingress path of water, and the set spring 11 is interposed between the bottom part of the casing 9, which forms the airtight chamber A, and the retainer 7.

The casing 9 is divided into two in the center-line direction thereof and formed into an annular base part 9b and a bowl-shaped cover part 9c.

The base part 9b and the cover part 9c are fixed to the coupling plate 8 by a plurality of through bolts 13, which are penetrate therethrough.

One end of each of the through bolts 13 is screwed with the coupling plate 8, and a lock nut 14 screwed at an intermediate position thereof is fixed to the coupling plate 8 by crimping to the coupling plate 8.

The base part 9b of the casing 9 is attached so that the through bolts 13 are inserted therethrough, and the base part 9b abuts the lock nuts 14, thereby carrying out locating thereof.

When the base part 9b is located in this manner, the distance between the coupling plate 8 and the base part 9b is regulated by the lock nuts 14, and the gap G corresponding to the height of the lock nut 14 is formed.

Furthermore, the cover part 9c of the casing 9 is also attached so that the through bolts 13 penetrate therethrough, and the cover part 9c is tightened to the coupling plate 8 together with the base part 9b by cap nuts 15, which are attached by screwing with the other ends of the through bolts 13.

On the other hand, the diaphragm 12 is formed in a donut-plate shape, and the outer peripheral part thereof is sandwiched by the base part 9b and the cover part 9c.

The inner peripheral part of the diaphragm 12 is overlapped with the retainer 7 from the opposite side of the coupling plate 8 and is fixed to the retainer 7 by crimping by a pressing plate 17, which is fixed to the retainer 7 by bolts 16.

The airtight chamber A is formed by the diaphragm 12 and the cover part 9c, which are attached in this manner.

On the other hand, as shown in FIG. 3 and FIG. 4, to the other projecting part of the actuation shaft 3, a lever 18 orthogonal to the axis thereof is attached so as to extend to the radial-direction outer side of the actuation shaft 3.

The relative turning of the lever 18 with respect to the actuation shaft 3 about the axis thereof is restrained, and the lever 18 is integrated by a nut 19, which is attached to the end part of the actuation shaft 3 by screwing.

Meanwhile, a pillar 20 on which one end of the closing spring 5 is hooked is attached to a position on the lever 18 that is distant, by a predetermined distance, from the part coupled to the actuation shaft 3.

As shown in FIG. 3 and FIG. 4, the other end of the closing spring 5 is hooked on a pillar 21, which is provided to project from external part of the valve body 2, and always retained in a stretched state.

Herein, as shown in FIG. 5 and FIG. 6, the closing spring 5 stretched between the pillars 20 and 21 is configured to be always positioned below the actuation shaft 3 (the side on which the valve disc 4 is provided), and the biasing force thereof is configured to act on the valve disc 4 toward the valve seat 2a.

As shown in FIG. 5 and FIG. 6, the valve disc 4 is integrally formed with intermediate part of the actuation shaft 3 and is attached to an arm 22, which is positioned in the valve body 2, via a swinging mechanism 23.

The automatic closing device 1 according to the present embodiment configured in this manner obtains a normal state by turning the lever 18 so that the valve disc 4 is at an open position and retaining the valve disc 4 at the open position.

By such an operation of the lever 18, the actuation shaft 3 is turned, the plurality of recessed parts 3a formed on the external surface thereof are opposed to the locking grooves 6, which are formed on the retainer 7.

When the locking grooves 6 and the recessed parts 3a are opposed to each other in this manner, the engagement members 10, which are freely fitted in the locking grooves 6, are similarly opposed to the recessed parts 3a.

Herein, since the retainer 7 is biased toward the coupling plate 8 by the set spring 11, the locking grooves 6 are also moved toward the coupling plate 8, and, along with this, the engagement members 10 are pushed into the recessed parts 3a by the shallow groove parts 6a of the locking grooves 6.

The engagement members 10 pushed into the recessed parts 3a in this manner are restrained by the shallow groove parts 6a from moving in the direction in which they are detached from the recessed parts 3a.

Herein, the guide projections 8a, which are provided to project from the coupling plate 8, are mated with the locking grooves 6 and restrain the relative turning of the retainer 7 with respect to the actuation shaft 3.

As a result, the actuation shaft 3 restrains the turning of the actuation shaft 3 by the engagement between the recessed parts 3a and the engagement members 10, the engagement between the engagement members 10 and the retainer 7, and the engagement between the locking grooves 6 of the retainer 7 and the guide projections 8a.

Therefore, the valve disc 4, which is attached to the actuation shaft 3, is retained in a state in which the valve seat 2a is opened, the flow channel (ventilation channel) formed by the air pipe V is retained in an open state, and a pressure adjusting function of the tank T is ensured.

In such normal time, if seawater pours onto the deck of the ship S, the seawater may pour onto the automatic closing device 1.

If the seawater pours onto the automatic closing device 1, the seawater may ingress into the casing 9 from the gap G, which is formed between the valve body 2 and the casing 9.

If the seawater enters into the casing 9, the seawater contacts the diaphragm 12, but the time during which the ingressed seawater stays in the casing 9 is short, and the force applied to the diaphragm 12 by the seawater is only the kinetic energy of the seawater. Therefore, the external force that acts on the diaphragm 12 is small.

Furthermore, if waves are poured onto the casing 9 in the normal time, since the casing 9 does not have any shielding object in the outer periphery thereof, the waves pass through the gap G between the casing 9 and the valve body 2, and a negative pressure is generated in the casing 9 in this process.

This negative pressure acts on the diaphragm 12 as the force in the direction in which the retainer 7 is pushed against the coupling plate 8, therefore, prevents unnecessary movement of the retainer 7, and prevents malfunction of the hydraulic-pressure detecting mechanism P.

Therefore, the diaphragm 12 is not actuated, and the air pipe V is not closed in the automatic closing device 1.

On the other hand, if the ship S sinks into the sea because of sinking or the like, seawater ingresses the space between the casing 9 and the valve body 2 from the gap G, and the hydraulic pressure corresponding to the depth acts on the diaphragm 12.

Then, if the hydraulic pressure exceeds the set pressure, which is set by the set spring 11, the diaphragm 12 is deformed so as to be pushed into the airtight chamber A of the casing 9.

Along with this, the retainer 7 to which the diaphragm 12 is attached is moved so as to be separated from the valve body 2.

Along with such movement of the retainer 7, the shallow groove parts 6a of the locking grooves 6 opposed to the engagement members 10 are separated from the engagement members 10, and the deep groove parts 6b of the locking grooves 6 are opposed to the engagement members 10.

As a result, the restraining force for retaining the engagement members 10 and the recessed parts 3a in the engaged state is cancelled.

The biasing force from the closing spring 5 is always acting on the actuation shaft 3, and, as shown in FIG. 8, this biasing force causes the actuation shaft 3 to turn while pushing the engagement members 10 toward the deep groove parts 6b.

Such turning of the actuation shaft 3 causes the valve disc 4, which is attached to the actuation shaft 3, to be seated as shown in FIG. 6, and the air pipe V is closed.

The ship S has to sink to a predetermined depth to close the air pipe V by the automatic closing device 1 of the present invention, and, during that period, the air pipe V is not closed by the automatic closing device 1, and inflow of seawater cannot be prevented.

Therefore, the permissible inflow amount of the seawater is set by the relation to the outflow amount of the content of the tank T, and the actuation pressure by the set spring 11 is set in accordance with the permissible inflow amount.

In the present embodiment, since the float valve F is provided in the upstream side of the automatic closing device 1 as described above, the closing function by the float valve F works until the automatic closing device 1 is actuated, and ingress of seawater into the air pipe V is prevented.

The closing action of the valve disc 4 is carried out only by the biasing force of the closing spring 5. Therefore, the function to generate buoyancy at the valve disc 4 is not required.

Therefore, the valve disc 4 is enabled to have the strength that withstands the hydraulic pressure of a deep depth, and leakage of the content of the tank in case of sinking of the ship S can be effectively prevented.

Note that the various shapes, dimensions, etc. of the constituent members shown in the above described embodiment are examples and can be variously changed based on design requirements, etc.

**Reference Signs List**

| | | | | | |
|---|---|---|---|---|---|
| 1 | automatic closing device | | | | |
| 2 | valve body | | | | |
| 2a | valve seat | | | | |
| 3 | actuation shaft | | | | |
| 3a | recessed parts | | | 4 | valve disc |
| 5 | closing spring | | | | |
| 6 | locking groove | | | | |
| 6a | shallow groove part | | | | |
| 6b | deep groove part | | | | |
| 7 | retainer | | | | |
| 8 | coupling plate | | | | |
| 8a | guide projections | | | | |
| 9 | casing | 9a | opening | 9b | base part |
| 9c | cover part | | | | |
| 10 | engagement member | | | | |
| 11 | set spring | | | | |
| 12 | diaphragm | | | | |
| 13 | bolt | | | | |
| 14 | lock nut | | | 15 | cap nut |
| 16 | bolt | | | | |
| 17 | pressing plate | | | | |
| 18 | lever | | | | |
| 19 | nut | | | | |
| 20,21 | pillar | | | | |
| 22 | arm | | | | |
| 23 | swinging mechanism | | | | |
| A | airtight chamber | | | | |
| F | float valve | | | | |
| G | gap | | | | |
| P | hydraulic-pressure detecting mechanism | | | | |
| R | locking mechanism | | | | |
| S | ship | | | | |
| T | tank | | | | |
| V | air pipe | | | | |

## Claims

1. An automatic closing device (1) of a ship air pipe provided in a vicinity of a pipe head of the air pipe (V) installed in a ship (S), the automatic closing device (1) configured to detect a hydraulic pressure generated in case of sinking of the ship (S) so as to close the air pipe (V), the automatic closing device (1) **characterized by** comprising:
a valve body (2) constituting part of a flow channel of the air pipe (V) and forming a valve seat (2a) intersecting with the flow channel;
an actuation shaft (3) turnably attached to the valve body (2) ;
a valve disc (4) integrally attached to the actuation shaft (3) and configured to open/close the flow channel by seating/unseating onto/from the valve seat (2a);
a closing spring (5) erected between the actuation shaft (3) and the valve body (2) and configured to bias the valve disc (4) toward a seated position;
a locking mechanism (R) configured to lock the actuation shaft (3) in a state that the valve disc (4) is unseated against biasing force of the closing spring (5); and
a hydraulic-pressure detecting mechanism (P) configured to cancel the locking of the actuation shaft (3) of the locking mechanism (R) when the hydraulic pressure exceeds a set value; wherein
the actuation shaft (3) is projecting to lateral part of the valve body (2), and a recessed part (3a) is formed on a lateral surface of the projecting part;
the locking mechanism (R) comprises:
a retainer (7) provided to surround the actuation shaft (3), configured to be movable in a direction of an axis of the actuation shaft (3) and be restrained from turning about the axis, having a locking groove (6) formed on an inner surface thereof, the locking groove (6) being along the axis of the actuation shaft (3);
an engagement member (10) freely fitted in the locking groove (6) and capable of engaging with the recessed part (3a); and
a set spring (11) configured to press the retainer (7) toward a position overlapped with the recessed part (3a) together with the engagement member (10); and,
in the locking groove (6),
a shallow groove part (6a) configured to push the engagement member (10) into the recessed part (3a) when the retainer (7) is moved to the position overlapped with the recessed part (3a) and
a deep groove part (6b) configured to enable the engagement member (10) to be detached from the recessed part (3a) when moved to a position separated from the recessed part (3a)
are formed.

2. The automatic closing device (1) of the ship air pipe (V) according to claim 1, **characterized in that**
the hydraulic-pressure detecting mechanism (P) has
a bottomed-tube-shaped casing (9) attached to an outer part of the valve body (2) to enclose the projecting part of the actuation shaft (3) and the retainer (7) and
a diaphragm (12) coupling the casing (9) and the retainer (7) and having flexibility to form an airtight chamber (A) in a bottom side of the casing (9); and
the casing (9) is attached so as to form a gap (G) from the valve body (2) at an opening thereof and form an ingress path of water, and the set spring (11) is interposed between a bottom part of the casing (9) forming the airtight chamber (A) and the retainer (7).
